# EUROPEAN PATENT SPECIFICATION

(11) **EP 3 501 158 B1**
(45) Date of publication and mention of the grant of the patent: **25.11.2020**
(21) Application number: 17755374.0
(22) Date of filing: 10.08.2017
(51) Int. Cl.: H04L 29/08, G06F 21/50

(54) **INTERRUPT SYNCHRONIZATION OF CONTENT BETWEEN CLIENT DEVICE AND CLOUD-BASED STORAGE SERVICE**
UNTERBRECHUNG DER SYNCHRONISATION VON INHALTEN ZWISCHEN EINER CLIENT-VORRICHTUNG UND EINEM CLOUD-BASIERTEN SPEICHERDIENST
INTERROMPRE UNE SYNCHRONISATION DE CONTENU ENTRE UN DISPOSITIF CLIENT ET UN SERVICE DE STOCKAGE EN NUAGE

(30) Priority: 17.08.2016 US 201615238869
(43) Date of publication of application: 26.06.2019
(73) Proprietor: Microsoft Technology Licensing LLC, Redmond, Washington 98052-6399 (US)
(72) Inventor: BAILEY, Steven, Redmond Washington 98052-6399 (US); RODRIGUES, John D., Redmond Washington 98052-6399 (US)
(74) Representative: Grünecker Patent- und Rechtsanwälte PartG mbB
(86) International application number: PCT/US2017/046182
(87) International publication number: WO 2018/034916

(56) References cited:
- WO-A2-2006/114723
- US-A1- 2013 151 658
- US-A1- 2014 188 808
- US-B1- 8 918 863

## Description

### BACKGROUND

Cloud-based storage services may be utilized for storing and/or sharing content between multiple client devices and users. The cloud-based storage services may include modules/engines that automatically execute a synchronization process to synchronize the content between the client devices and the cloud-based storage services. However, the synchronization process may be problematic when a user accidentally executes an operation to modify, delete, encrypt, and/or create content during a first time frame and does not notice this error until a second time frame It may be difficult to restore previous versions of items, folders, and/or files associated with the content.

Further, execution of the synchronization process may be problematic when the operation is unwarranted and executed by ransomware installed as malware on the client device. The ransomware may, for example, execute the operation to encrypt the content. A notification may be provided to the client device for display. The notification may prompt the user to submit a payment to decrypt the content. The notification may also include an entry box configured to receive the payment. Restoration of the unencrypted content, without submitting the payment, may be difficult, as the encrypted content may be synchronized between the client device and the cloud-based storage service.

US 8 918863 B1 relates to a method and apparatus for monitoring source data that is a target of a backup service. Backup data produced by the backup service is analyzed to identify changes in the source data. At least one trend related to the changes is identified. At least one deviation in the changes from the at least one trend is identified. At least one notification may then be generated that includes information indicative of the at least one deviation. The notification(s) may be sent to a network management system as an indication of user error or malicious attacks.

### SUMMARY

It is the object of the present invention to provide an improved method to react to an unusual data access.

This object is solved by the subject matter of the independent claims.

Preferred embodiments are defined in the dependent claims.

Embodiments may be provided to interrupt a synchronization of content between a client device and a cloud-based storage service. A usage pattern associated with a user in conjunction with the content may be identified. A model may be created based on the usage pattern. An operation attempted to be performed on the content by the user may be detected. Then, the attempted operation may be compared to the model to determine whether the attempted operation deviates from the usage pattern. In response to a determination that the attempted operation deviates from the usage pattern, an execution of the attempted operation may be halted and a notification of the attempted operation may be provided to the client device associated with the user for display. In some examples, the user may be allowed to approve the attempted operation upon authorization.

These and other features and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

FIG. 1 illustrates an example network environment where a server-side system is configured to interrupt a synchronization of content between a client device and a cloud-based storage service may be implemented;
FIG. 2 illustrates another example network environment where a client-side system is configured to interrupt a synchronization of content between a client device and a cloud-based storage service may be implemented;
FIG. 3 illustrates a conceptual diagram illustrating an example process for interrupting a synchronization of content between a client device and a cloud-based storage service;
FIG. 4A and FIG. 4B illustrate example notifications provided to a client device in response to a detection of an attempted operation deviating from an identified usage pattern;
FIG. 5 includes a flow diagram that illustrates a method to interrupt a synchronization of content between a client device and a cloud-based storage service;
FIG. 6 is a networked environment, where a system according to embodiments may be implemented;
FIG. 7 is a block diagram of an example general purpose computing device, which may be used to interrupt a synchronization of content between a client device and a cloud-based storage service; and
FIG. 8 includes a logic flow diagram that illustrates a process to interrupt a synchronization of content between a client device and a cloud-based storage service, according to embodiments.

### DETAILED DESCRIPTION

As briefly described above, embodiments may be provided to interrupt a synchronization of content between a client device and a cloud-based storage service to protect users from accidental modifications to content executed by the user, unwarranted or nefarious modifications of the content executed by ransomware or malware installed on the client device, or uncommon and intentional modifications to the content executed by the user. The cloud-based storage service may identify a usage pattern associated with the user in conjunction with the content. The cloud-based storage service may create a model based on the usage pattern.

Further, an operation attempted to be performed on the content by the user may then be detected by the cloud-based storage service. Then, the cloud-based storage service may compare the attempted operation to the model to determine whether the attempted operation deviates from the usage pattern. In response to a determination that the attempted operation deviates from the usage pattern, an execution of the attempted operation may be halted and a notification of the attempted operation may be provided to the client device associated with the user for display.

In some examples, the notification may prompt the user to one of approve the attempted operation and reject the attempted operation. In response to detecting an approval of the attempted operation, the cloud-based storage service may remove the hold on executing the attempted operation and may allow the synchronization process to occur. The synchronization process may synchronize modified content between the client device and the cloud-based storage service. In response to detecting a rejection of the attempted operation, the cloud-based storage service may prevent an execution of the attempted operation and prevent the synchronization process from occurring.

In the following detailed description, references are made to the accompanying drawings that form a part hereof, and in which are shown by way of illustrations, specific embodiments, or examples. The scope of the invention is defined by the appended claims.

While some embodiments will be described in the general context of program modules that execute in conjunction with an application program that runs on an operating system on a personal computer, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable computing devices. Embodiments may also be practiced in distributed computing environments where tasks are performed by remote processing devices that are linked through a communications network. In a distributed computing environment, program modules may be located in both local and remote memory storage devices.

Some embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium is a computer-readable memory device. The computer-readable storage medium can, for example, be implemented via one or more of a volatile computer memory, a non-volatile memory, a hard drive, a flash drive, a floppy disk, or a compact disk, and comparable hardware media.

Throughout this specification, the term "platform" may be a combination of software and hardware components for interrupting a synchronization of content between a client device and a cloud-based storage service. Examples of platforms include, but are not limited to, a hosted service executed over a plurality of servers, an application executed on a single computing device, and comparable systems. The term "server" generally refers to a computing device executing one or more software programs typically in a networked environment. However, a server may also be implemented as a virtual server (software programs) executed on one or more computing devices viewed as a server on the network. More detail on these technologies and example operations is provided below.

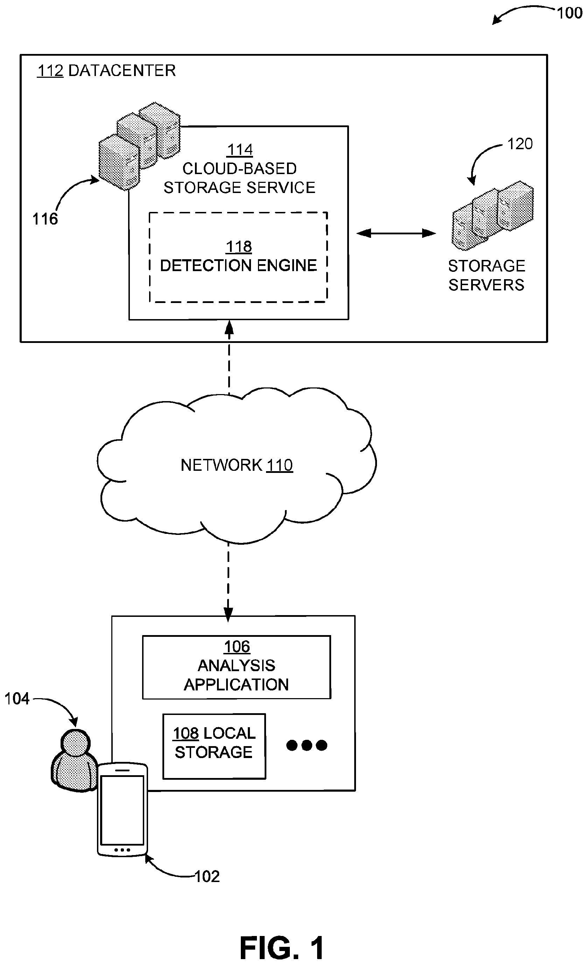

FIG. 1 illustrates an example network environment where a server-side system is configured to interrupt a synchronization of content between a client device and a cloud-based storage service may be implemented according to at least some embodiments disclosed herein.

As illustrated in a diagram 100, an example system may include a datacenter 112. The datacenter 112 may host a storage service, such as a cloud-based storage service 114. The cloud-based storage service 114 may be configured to provide storage for content that may be accessed across multiple client devices and users. The cloud-based storage service 114 may also enable sharing of the content between the multiple client devices and the users. The datacenter 112 may also include processing servers 116 that may be configured to execute the cloud-based storage service 114, among other components.

In some examples, one or more of the processing servers 116 may execute a detection engine 118 of the cloud-based storage service 114. The detection engine 118 may be integrated with the cloud-based storage service 114 to interrupt a synchronization of the content between the multiple client devices and the cloud-based storage service 114. The detection engine 118 may protect users, such as a user 104, from accidental alterations of the content.

In further examples, the detection engine 118 may identify unwarranted or nefarious alterations of the content. In some examples, the unwarranted or nefarious alterations of the content may be executed by ransomware installed on the client device 102. The ransomware may be described as malware installed covertly on the client device 102 of the user 104. The ransomware may execute an attack on the content stored on the client device 102 to prevent or limit users access to the content. The attack may include an encryption of the content, a deletion of the content, and/or a modification of the content, among other examples. The ransomware may then demand a payment to restore the content to the previous version. In some examples, the ransomware may execute the attempted operation to encrypt one or more items, files, and/or folders associated with the content. The detection engine 118 may provide an encryption notification to the client device 102 for display. The encryption notification may prompt the user 104 to submit a payment to decrypt the one or more items, files, and/or folders associated with the content. The encryption notification may also include an entry box configured to receive the payment.

The datacenter 112 may also include one or more storage servers 120 configured to manage data stores comprising data associated with content stored by the cloud-based storage service 114. As described herein, the cloud-based storage service 114 and/or the detection engine 118 may be implemented as software, hardware, or combinations thereof.

In some embodiments, the cloud-based storage service 114 may be configured to interoperate with various applications to synchronize the content stored in local storage 108 on the client device 102 (associated with the user 104) with the same content stored remotely at the cloud-based storage service 114. For example, as illustrated in the diagram 100, the user 104 may execute a thin (e.g., a web browser) or a thick (e.g., a locally installed client application) version of an analysis application 106 through the client device 102 with which the cloud-based storage service 114 may be configured to integrate with over one or more networks, such as a network 110. The analysis application 106 may be hosted by the cloud-based storage service 114, such as a synchronization client, for example. The client device 102 may include a desktop computer, a laptop computer, a tablet computer, a vehicle-mount computer, a smart phone, or a wearable computing device, among other similar devices. A communication interface may facilitate communication between the cloud-based storage service 114 and the analysis application 106 over the network 110.

In an example embodiment, the detection engine 118 may be configured to identify a usage pattern associated with the user 104 in conjunction with the content. The usage pattern associated with the user 104 may be determined based on a type of the content, previous operations performed on the content by the user 104, a size of an account of the user 104, and/or a frequency at which the user 104 performed the previous operations on the content. The detection engine 118 may be further configured to create a model based on the usage pattern.

In some examples, the detection engine 118 may also identify a threshold based on the model. The threshold may identify a type of altered content, an amount of altered content, and/or an amount of altered content within a time period. The type of the altered content may include one or more items, files, and/or folders associated with the content. The amount of the altered content may be measured in a percentage or a statistical numerical value. The time period may be measured in seconds, minutes, hours, weeks, or days, among other examples. In some examples, the threshold may be one of a learned value or a calculated value. In other examples, the threshold may be based on the type of the content, previous operations performed on the content by the user 104, a size of an account associated with the user 104, and/or a frequency at which the user 104 performed the previous operations on the content.

In examples, if the user 104 is an administrator for an organization, the user may alter multiple files in a short time period; the threshold may include 2,000 files modified within the time period of one second. In another example, the user 104 may be a team member of the organization and may have limited access privileges to the content. The threshold may include 10 files modified within the time period of one second. The detection engine 118 may store the model and usage pattern in the data stores managed by the one or more storage servers 120 of the cloud-based storage service 114.

In other examples, the detection engine 118 may detect an operation attempted to be performed on the content by the user 104. The attempted operation may be performed on the client device 102. The attempted operation may be provided to the server executing the cloud-based storage service 114. A synchronization process may be executed through the analysis application 106. The attempted operation may be one of a creation, a deletion, a modification, and an encryption of the content. The detection engine 118 may further detect metadata associated with the attempted operation, such as the amount of the content being altered, the time period between alterations, a process initiating the alterations, content extensions before and after the alterations, the size of the content before and after the alterations, and/or a presence of particular signatures, among other examples.

The detection engine 118 may retrieve the model from the data stores and may compare the attempted operation to the model, including the metadata, to determine whether the attempted operation deviates in a statistically significant amount from the usage pattern. In other examples, if the attempted operation does not deviate from the usage pattern, then the attempted operation may be labeled as "intentional" and may have been executed deliberately by the user 104. Therefore, the operation may be executed and synchronization may be enabled such that the content as altered by the operation may be synchronized between the local storage 108 of the client device 102 and the remote data stores of the cloud-based storage service 114.

In some examples, the attempted operation may deviate from the usage pattern if the content altered during the attempted operation exceeds the threshold defined by the model. In some examples, if the attempted operation deviates from the usage pattern, the attempted operation may be labeled as "accidental" and may have occurred unintentionally by the user 104. In other examples, if the attempted operation deviates from the usage pattern, the attempted operation may be labeled as "unwarranted" or "nefarious" and may have been executed, as an attack, by the ransomware. In further examples, if the attempted operation deviates from the usage pattern, the attempted operation may be labeled as "unusual but intentional" if the attempted operation is not commonly performed, but was executed by the user 104.

In some examples, the amount of content altered may be compared against a total amount of content in the account of the user 104 to determine whether the attempted operation deviates from the usage pattern. Therefore, the detection engine 118 may be configured to halt an execution of the attempted operation. The detection engine 118 may also prevent and/or place a hold on synchronization of the content between the client device 102 and the cloud-based storage service 114 to prevent versions of content altered by potentially unintended operations from propagating to the data stores of the cloud-based storage service 114.

In further examples, if the attempted operation deviates from the usage pattern, the detection engine 118 may be further configured to provide a notification of the attempted operation to the client device 102 associated with the user 104 for display. The notification may prompt the user 104 to approve the attempted operation or to reject the attempted operation.

In further examples, the detection engine 118 may detect an approval of the attempted operation. In response, the detection engine 118 may remove the hold on execution of the attempted operation and may allow the synchronization process to occur. In other examples, the detection engine 118 may detect a rejection of the attempted operation. The detection engine 118 may then prevent an execution of the attempted operation and may prevent the synchronization process from occurring.

In other examples, if the attempted operation deviates from the usage pattern and the operation is executed (either following approval by the user 104 or due to an error, for example), the detection engine 118 may provide a restoration element associated with the notification to the client device 102 for display. In response to detecting an activation of the restoration element, the detection engine 118 may enable the user 104 to select a previous version of the content preserved at the cloud-based storage service 114 to be restored in the local storage 108 of the client device 102. Further, in response to detecting the activation of the restoration element, the content may be replaced with the previous version of the content. The restoration element may be activated if the user 104 accidentally executes the attempted operation or if ransomware/malware executed the attempted operation.

Some of the actions and/or processes described herein have been illustrated from the perspective of a server (for example, the processing servers 116 configured to execute the cloud-based storage service 114), however the same actions may be performed similarly by a client (for example, the analysis application 106), among other entities.

As previously discussed, the cloud-based storage service 114 may be utilized for storing and/or sharing the content across multiple client devices, where the cloud-based storage service 114 may include modules/engines that automatically synchronize the content between the client device 102 and the cloud-based storage service 114. However, the user 104 may execute an accidental operation on the client device 102, where the accidental operation may modify the content. The modified content may then be synchronized via a synchronization process between the cloud-based storage service 114 and the client device 102. After the synchronization process occurs, restoration of the content may be difficult.

Further, ransomware may be installed as malware on the client device 102. Attackers may use the ransomware to execute a deletion of the content, an addition to the content, a modification of the content, and/or an encryption of the content. The synchronization process may then propagate these unwarranted modifications to cloud-based storage service 114. In some examples, the cloud-based storage service 114 may provide a notification of the attempted operation to the client device 102 associated for display. However, the notification is not proactive, as it does not detect and/or prevent the attempted operation from being executed.

Therefore, embodiments are directed to interrupting the synchronization of content between the client device 102 and the cloud-based storage service 114 to protect the user 104 both proactively and remedially from accidental modifications to content by the user 104 and unwarranted modifications to content by the malware/ransomware. This may improve the security of the content stored both locally at the client device 102 and remotely at the cloud-based storage service 114. The attempted operations that could be destructive to the content may be detected and put on hold until the user 104 approves or rejects the execution of the attempted operations. Further, once the attempted operations have been executed, the notification may be provided for display on the client device 102 that enables user selection of an option to restore the content to a previous version before the attempted operation occurred.

In addition to security improvements, user interactivity may be increased by enabling users to approve or reject execution of the attempted operations and/or to select a restoration option. This may also enhance reliability by ensuring that no accidental or unwarranted operations are executed, and even if they are, restoration of previous content versions is possible. Moreover, by placing holds on potentially unintended operations and synchronization, processor and memory usage may be reduced when only approved operations are executed and subsequently synchronized.

Embodiments, as described herein, address a need that arises from very large scale of operations created by software-based services that cannot be managed by humans. The actions/operations described herein are not a mere use of a computer, but address results of a system that is a direct consequence of software used as a service offered in conjunction with the multiple client devices and multiple users, storing and/or sharing the content both locally at the local storage 108 of the client device 102 and remotely at the cloud-based storage service 114.

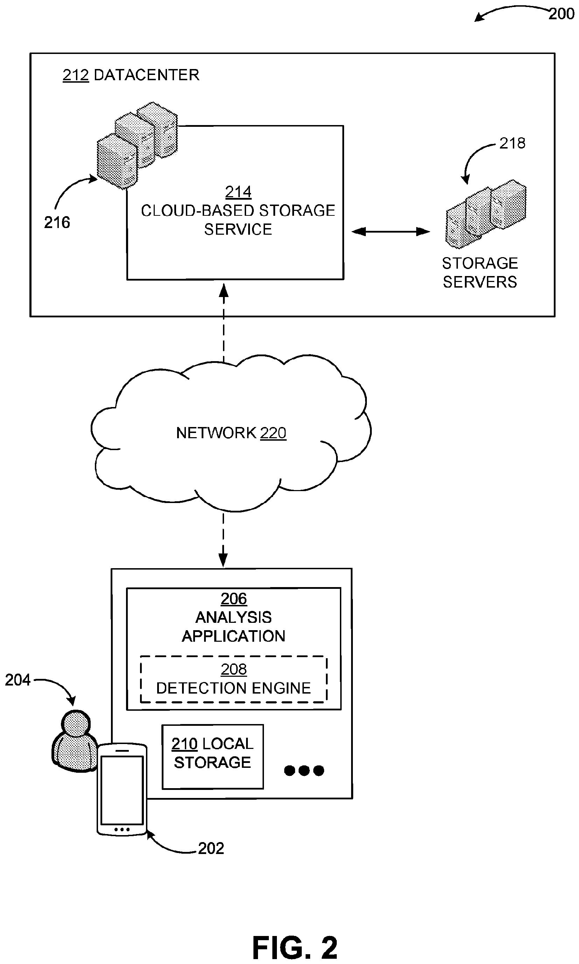

FIG. 2 illustrates another example network environment where a client-side system is configured to interrupt a synchronization of content between a client device and a cloud-based storage service may be implemented, according to at least some embodiments disclosed herein.

As illustrated in a diagram 200, a user 204 may execute a thin (e.g., a web browser) or a thick (e.g., a locally installed application) version of an analysis application 206 (e.g., a synchronization client) through a client device 202. A cloud-based storage service 214 executed by one or more processing servers 216 of a datacenter 212 may be configured to interact with the analysis application 206 over one or more networks, such as a network 220. For example, the cloud-based storage service 214 may be configured to synchronize content stored within a local storage 210 of the client device 202 via the analysis application 206 for remote storage at data stores managed by one or more storage servers 218 of the cloud-based storage service 214.

In some examples, a communication interface may facilitate communication between the cloud-based storage service 214 and the analysis application 206 over the network 220. The analysis application 206 may include, among other components, a detection engine 208 and/or an anti-virus engine configured to interrupt a synchronization of the content between the client device 202 and the cloud-based storage service 214 to protect the user 204 from accidental modifications and/or unwarranted/nefarious modifications of the content.

In an example embodiment, the detection engine 208 and/or the anti-virus engine may be configured to identify and monitor a usage pattern associated with the user 204 in conjunction with the content. The usage pattern may include information, such as, a number and type of processes that occur during a time period and/or a location of where the processes occur (e.g., in specific folders associated with the content). The content may be stored locally (e.g., on local storage 210) of the client device 202. The detection engine 208 and/or the anti-virus engine may monitor operations performed on the content by the user 204, an account size of the user 204, and/or a frequency at which the user 204 performs operations on the content, among other examples. In an example, the usage pattern may be provided to the cloud-based storage service 214. The detection engine 208 and/or the anti-virus engine may then receive a model created by the cloud-based storage service 214 based on the usage pattern that defines a threshold based on the type of altered content, the amount of altered content, and/or the amount of altered content within a time period. The received model may be stored locally at the local storage 210 of the client device 202. In another example, the detection engine 208 and/or the anti-virus engine may be configured to define the threshold indicating the maximum amount of the content to be altered within the time period based on the usage pattern.

According to other examples, the detection engine 208 may also be configured to detect an attempted operation performed on the content by the user 204. The attempted operation may include a deletion of the content, an encryption of the content, or an update of the content, among other types of alterations to the content. The detection engine 208 may retrieve the model from the local storage 210 and may compare the model to the attempted operation to determine whether the attempted operation deviates in a statistically significant amount from the usage pattern. In other examples, the detection engine 208 and/or the anti-virus engine may retrieve the model from the local storage 210 and may compare the threshold to the type of altered content, the amount of altered content, and/or the amount of altered content within the particular period during the attempted operation to determine whether the content altered during the time period and in response to the attempted operation exceeds the threshold defined by the model.

In response to a determination that the content altered during the attempted operation does not exceed the threshold defined by the model, execution of the operation may be enabled. Following execution of the attempted operation, the content, as altered by the attempted operation, may be synchronized between the client device 202 and the cloud-based storage service 214. In response to a determination that the threshold is exceeded, the detection engine 208 may be configured to halt an execution of the attempted operation and halt the synchronization process to synchronize the content between the client device 202 and the cloud-based storage service 214. The detection engine 208 may also provide a notification of the attempted operation to the client device 202 associated with the user 204 for display. The notification may prompt the user 204 to one of approve the attempted operation and reject the attempted operation. In other examples, the notification may prompt the user 204 to provide authentication credentials through a textual entry box associated with the notification to approve the attempted operation. The authentication credentials may include a password and/or an identification of the user 204.

In some examples, in response to detecting an approval of the attempted operation, the detection engine 208 may remove the hold on executing the attempted operation and may allow the synchronization process to occur. The synchronization process may synchronize the modified content between the client device 202 and the cloud-based storage service 214. In additional examples, in response to detecting a rejection of the attempted operation, the detection engine 208 may prevent an execution of the attempted operation and may prevent the synchronization process from occurring.

Some of the actions and/or processes described herein have been illustrated from the perspective of a client (for example, the analysis application 206 executing on the client device 202), however the same actions/operations may be performed similarly by a server (for example, the processing servers 216 configured to execute the cloud-based storage service 214), among other entities.

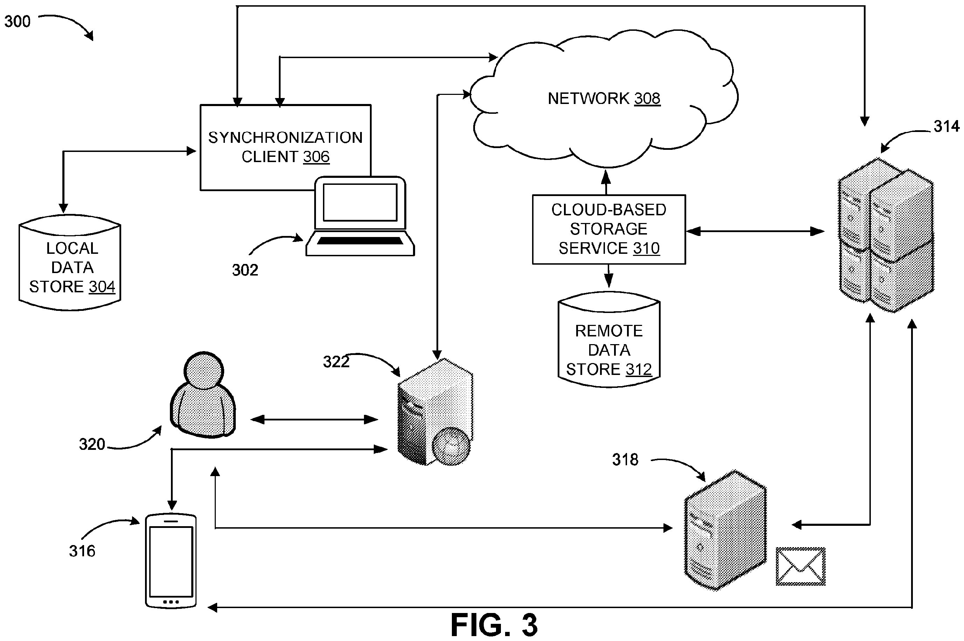

FIG. 3 illustrates a conceptual diagram illustrating an example process for interrupting a synchronization of content between a client device and a cloud-based storage service, according to at least some embodiments disclosed herein.

As shown in a diagram 300, a cloud-based storage service 310 may be configured to store content in a remote data store 312 associated with the cloud-based storage service 310. The content may include one or more items, files, and/or folders. In some embodiments, the cloud-based storage service 310 may be configured to interact with a synchronization client 306 executing on a client device 302 over one or more networks, such as a network 308.

The interaction between the cloud-based storage service 310 and the synchronization client 306 may enable a synchronization process, such as a periodic synchronization process, between the content stored at a local data store 304 of the client device 302 and the content stored at the remote data store 312. The synchronization process may ensure that the most updated content is stored both locally at the client device 302 and remotely at the cloud-based storage service 310. In an example, the content stored at the local data store 304 of the client device 302 may be periodically uploaded to the cloud-based storage service 310 and then stored in a remote data store 312. In other examples, the content may be downloaded from the cloud-based storage service 310 and then stored at the local data store 304 of the client device 302.

Additionally, the cloud-based storage service 310 may interrupt the synchronization process between the content stored locally on the client device 302 and the content stored remotely at the cloud-based storage service 310. The interruption may protect the user 320 from accidental modifications to the content executed by the user 320, unwarranted or nefarious modifications of the content executed by ransomware or malware installed on the client device 302, or uncommon and intentional modifications to the content executed by the user 320. In other examples, the synchronization client 306 may interrupt the synchronization process of the content between the client device 302 and the cloud-based storage service 310.

In some examples, one or more processing servers 314 associated with the cloud-based storage service 310 may be configured to identify a usage pattern associated with the user 320 in conjunction with the content, the content being stored at the remote data store 312. The one or more processing servers 314 may also create a model based on the usage pattern. In other examples, the usage pattern may be monitored and/or provided by the synchronization client 306. The usage pattern may be determined based on a type of the content, previous operations performed on the content by the user 320, a size of an account of the user 320, and/or a frequency at which the user 320 performed the previous operations on the content. In further examples, the model may define a threshold based on a type of altered content, an amount of altered content, and/or an amount of altered content within a time period.

In additional examples, the one or more processing server 314 may detect an operation attempted to be performed on the content by the user 320. The attempted operation may be performed at the client device 302, for example, and provided to the cloud-based storage service 310 via the synchronization client 306. The one or more processing servers 314 may compare the attempted operation to the model, including metadata associated with the attempted operation, to determine whether the attempted operation deviates in a statistically significant amount from the usage pattern. The attempted operation may deviate from the usage pattern if the type of altered content, the amount of altered content, and/or the amount of altered content within the time period (with which the attempted operation was executed) exceeds the threshold defined by the model.

If the attempted operation does not deviate from the usage pattern, then the operation may be identified and/or labeled as "intentional," indicating that the attempted operation was performed by the user 320. Then, the attempted operation may be executed and the synchronization process may be executed. The synchronization process may synchronize the modified content (resulting from the execution of the attempted operation) between the local data store 304 of the client device 302 and the remote data store 312 of the cloud-based storage service 310.

If the attempted operation deviates from the usage pattern, then the attempted operation may be identified and/or labeled as "uncommon and intentional" (indicating that the attempted operation is not typically performed, but was purposely performed by the user 320), "accidental" (indicating that the user 320 accidentally performed the attempted operation), or "unwarranted" (indicating that ransomware or malware performed the attempted operation without consent from the user 320). Therefore, the one or more processing servers 314 may be configured to mitigate any potential problems that may arise if the operation is accidental or unwarranted. For example, the one or more processing servers 314 may increase a frequency for versioning of the content, increase a number of previous versions of the content preserved in the remote data store 312, and/or increase a time frame for preservation of the previous versions of the content in the remote data store 312. The one or more processing servers 314 may also halt synchronization of the content between the client device 302 and the cloud-based storage service 310 to prevent versions of the modified content altered by potentially unintended operations from propagating to the remote data store 312.

The one or more processing servers 314 may be further configured to provide a notification of the attempted operation to the synchronization client 306 for display on the client device 302 associated with the user 320. In another example, the one or more processing servers 314 may provide the notification as an alert to a mobile device 316 of the user 320. The alert may include an audio alert, a visual alert, a tactile alert, and/or a textual alert (e.g., a short message service (SMS)).

In a further example, the one or more processing servers 314 may provide the notification as an email or an attachment to the email to a communication server 318 associated with the user 320. After receiving the notification, the user 320 may respond to the notification through a web user interface and/or an analysis application executing on an individual server 322 of a user client device (such as the client device 302 or the mobile device 316), for example. The notification may present the metadata that illustrates the statistically significant deviation of the attempted operation as compared to the model or the threshold. The notification may also prompt the user 320 to approve or reject the execution of the attempted operation. In some examples, the user 320 may also be prompted to provide authentication to approve the attempted operation. In some examples, the user 320 may approve the attempted operation. In response, the attempted operation may be executed and the synchronization process may be enabled.

In other examples, the one or more processing servers 314 may provide a restoration element associated with the notification to the client device 302 for display. In response to detecting an activation of the restoration element, the one or more processing servers 314 may enable the user 320 to select a previous version of the content preserved at the cloud-based storage service 310 to restore at the remote data store 312 and/or the local data store 304 of the client device 302 Further, in response to detecting an activation of the restoration element, the one or more processing servers 314 may replace the content with the previous version of the content. The restoration element may be provided as a remedial measure in the event that the attempted operation is executed and identified as accidental, unwarranted, or if the user 320 later wishes to undo the attempted operation to revert back to the previous version of the content.

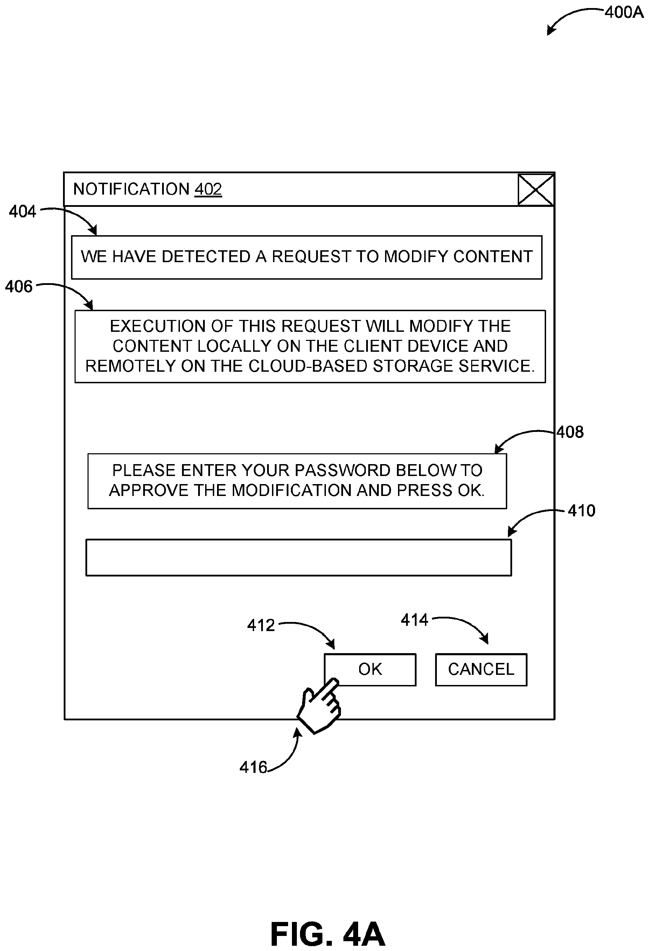

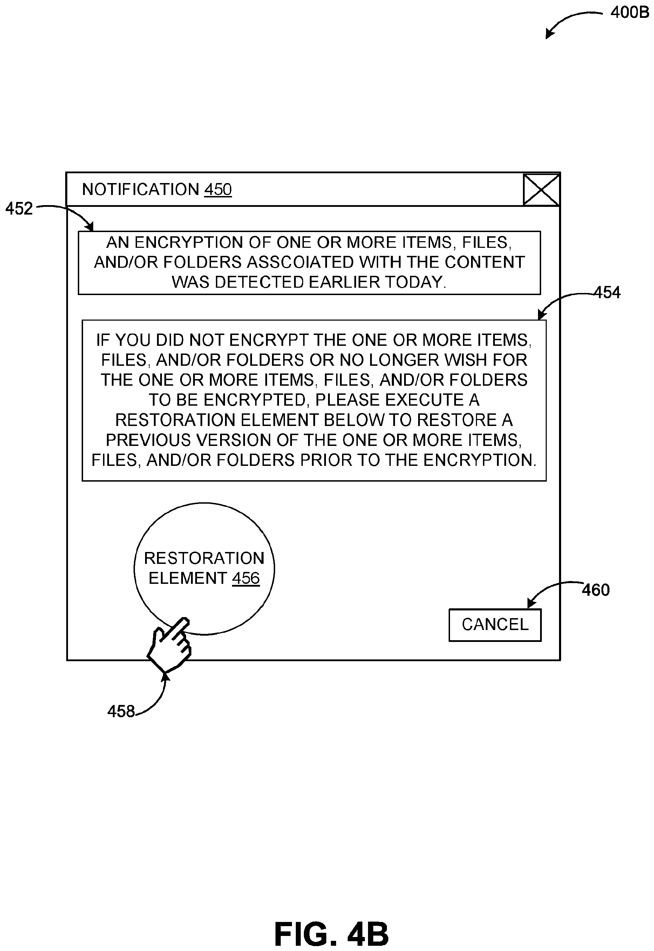

FIG. 4A and FIG. 4B illustrate example notifications provided to a client device in response to a detection of an attempted operation deviating from an identified usage pattern, according to at least some embodiments disclosed herein.

A cloud-based storage service may be configured to interrupt a synchronization of content between a client device and a cloud-based storage service. The cloud-based storage service may be configured to identify a usage pattern associated with a user in conjunction with the content and may create a model based on the usage pattern. As described previously, a threshold may be identified based on the model. The threshold may be based on a type of altered content, an amount of altered content, and/or an amount of altered content within a time period. The threshold may be a learned value or a calculated value identified by one or more machine learning techniques/mechanisms. The threshold may be based on the type of the content, previous operations performed on the content by a user, a size of an account associated with the user, and/or a frequency at which the user performed the previous operations on the content.

In some examples, the cloud-based storage service may detect an operation attempted to be performed on the content by the user and may compare the attempted operation to the model to determine whether the attempted operation deviates from the usage pattern (e.g., the modified content resulting from execution of the attempted operation exceeds the threshold defined by the model). In other examples, in response to a determination that the attempted operation deviates from the usage pattern, the cloud-based storage service may halt an execution of the attempted operation and may halt a synchronization process to synchronize the modified content between local storage located on the client device and remotely at the cloud-based storage service.

As illustrated in diagram 400A of FIG. 4A, the cloud-based storage service may also provide a notification 402 of the attempted operation to the client device associated with the user for display. In some examples, the notification 402 may be provided as an alert to a mobile device of the user. The alert may include an audio alert, a visual alert, a tactile alert, and/or a textual alert (e.g., a short message service (SMS)). In other examples, the notification 402 may be provided as the textual alert (e.g., an email message) to a communication server associated with the user. In further examples, the notification 402 may include an explanation that the attempted operation has been detected 404 and/or an explanation of the effects of the execution of the attempted operation 406. The notification 402 may also prompt the user to approve or reject the execution of the attempted operation.

The explanation that the attempted operation has been detected 404 may include, a message, such as, "we have detected a request to modify one or more items, files, and/or folders associated with the content." The explanation of the effects of the execution of the attempted operation 406 may include, another message, such as, "execution of the attempted operation will modify the one or more items, files, and/or folders associated with the content on the client device and on the cloud-based storage service".

In some examples, the notification 402 may prompt the user to provide authentication credentials 408 (e.g., a password and/or an identification of the user) through a textual entry box 410 associated with the notification 402 to approve the attempted operation. In response to verifying the authentication credentials and detecting execution 416 of an "OK" graphical element 412 displayed with the notification 402, the attempted operation (e.g., the modification of the content) may be executed. Further, the synchronization process may be executed to synchronize the modified content (resulting from execution of the attempted operation) between the client device and the cloud-based storage service. In other examples, in response to a failure to verify the authentication credentials and/or detecting an execution of a "CANCEL" graphical element 414 displayed with the notification 402, the attempted operation (e.g., the modification of the content) will be halted.

According to a diagram 400B of FIG. 4B, the cloud-based storage service may provide a restoration element 456 associated with a notification 450 to the client device for display. In other examples, the notification 450 may include an explanation that the attempted operation has been executed 452 and/or an explanation of process steps to take to remedy an accidental execution of the attempted operation (resulting from the user) or an unwarranted execution of the attempted operation (resulting from ransomware) 454. The explanation that the attempted operation has been executed 452 may include, a textual message, such as, "an encryption of one or more items, files, and/or folder associated with the content was detected." The explanation of the process steps to take to remedy the accidental execution of the attempted operation (resulting from the user) or the unwarranted execution of the attempted operation (resulting from ransomware) 454 may include, another textual message, such as, "if you did not encrypt the one or more items, files, and/or folders or no longer wish for the one or more items, files, and/or folders to be encrypted, please execute the restoration element below to restore a previous version of the one or more items, files, and/or folders prior to the encryption."

In response to detecting an activation 458 of the restoration element 456, the cloud-based storage service may enable the user to select a previous version of the one or more items, files, and/or folders associated with the content, the content being preserved at the cloud-based storage service, to restore and may replace the content with the previous version of the content. In response to a user selection of a "CANCEL" graphical element 460 associated with the notification 450, for example, the one or more items, files, and/or folders associated with the content may remain encrypted.

In other examples, the notification 450 may display additional graphical elements. The previous versions may still be preserved at the cloud-based storage service. Accordingly, the user may still be enabled to more easily restore previous versions of the content if desired at a later time.

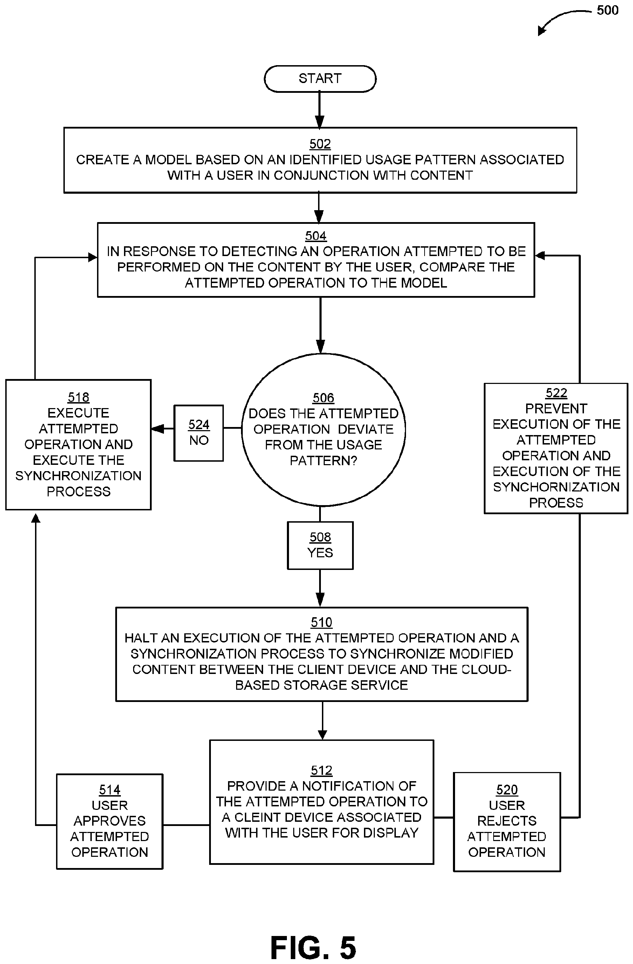

FIG. 5 includes a flow diagram that illustrates a method to interrupt a synchronization of content between a client device and a cloud-based storage service, according to at least some embodiments disclosed herein.

According to some examples, a cloud-based storage service may be configured to interact with a synchronization client being executed on a client device to automatically synchronize content stored locally on the client device with the same content stored remotely at the cloud-based storage service. The cloud-based storage service may also be configured to proactively and/or remedially prevent accidental and/or unwarranted/nefarious alteration of the content from being propagated to the cloud-based storage service and/or client device through synchronization.

As shown in a diagram 500 of FIG. 5, the cloud-based storage service may be configured to execute an operation 502. The operation 502 may include creating a model based on an identified usage pattern associated with a user in conjunction with content. The usage pattern associated with the user may be determined based on a type of the content, previous operations performed on the content by the user, a size of an account of the user, and/or a frequency at which the user performed the previous operations on the content. Additionally, the model may be created based on thresholds derived from general trends observed from the user population. The thresholds may identify a type of altered content, an amount of altered content, and/or an amount of altered content within a time period. Each of the thresholds may be one of a learned value or a calculated value. In other examples, the thresholds may be based on the type of the content, previous operations performed on the content by a user, a size of an account associated with the user, and/or a frequency at which the user performed the previous operations on the content.

Then, the cloud-based storage service may execute an operation 504. The operation 504 may include, in response to detecting an operation attempted to be performed on the content by the user, comparing the attempted operation to the model. The attempted operation may be one of a creation, a deletion, a modification, and an encryption. The cloud-based storage service may then execute an operation 506. The operation 506 may include determining if the attempted operation deviates from the usage pattern. Next, the cloud-based storage service may execute an operation 508. The operation 508 may include, identifying the attempted operation as deviating from the usage pattern. Next, the cloud-based storage service may execute an operation 510. The operation 510 may include halting an execution of the attempted operation and halting a synchronization process to synchronize modified content between the client device and the could-based storage service.

Further, the cloud-based storage service may execute an operation 512. The operation 512 may include providing a notification of the attempted operation to a client device associated with the user for display. The notification may prompt a user to one of approve the attempted operation or reject the attempted operation in order to proactively prevent accidental and/or nefarious alteration of the content, where the user may also be prompted to provide authentication to approve. Upon authorization (and/or authentication) of the user at operation 513, the cloud-based storage service may then execute an operation 514 or an operation 520. The operation 514 may include detecting the user as approving the attempted operation. The operation 520 may include detecting the user as rejecting the attempted operation.

In response to detecting an execution of the operation 514, the cloud-based storage service may then execute an operation 518. The operation 518 may include removing the hold on executing the attempted operation and allowing the synchronization process to occur. The synchronization process may synchronize modified content between the client device and the cloud-based storage service. In other examples, the cloud-based storage service may detect execution of the operation 520. In response, the cloud-based storage service may execute an operation 522. The operation 522 may include preventing an execution of the attempted operation and preventing the synchronization process from occurring.

The process may then restart at the operation 504 in response to another detection of an attempted operation performed on the content. Then, once the operation 504 is executed, the cloud-based storage service may provide a restoration option that enables a previous version of the content preserved at the cloud-based storage service to be restored at the client device as a remedial measure in the event that the executed operation is accidental and/or unwarranted/nefarious. In another embodiment, the process may restart at the operation 502, where the model may be updated based on recent user activity, for example.

The examples provided in FIG. 1 through FIG. 5 are illustrated with specific systems, services, applications, modules, and notifications. Embodiments are not limited to environments according to these examples. Interruption of a synchronization of content between a client device and a cloud-based storage service may be implemented in environments employing fewer or additional systems, services, applications, engines, modules, and notifications. Furthermore, the example systems, services, applications, engines, modules, and notifications shown in FIG. 1 through FIG. 5 may be implemented in a similar manner with other values using the principles described herein.

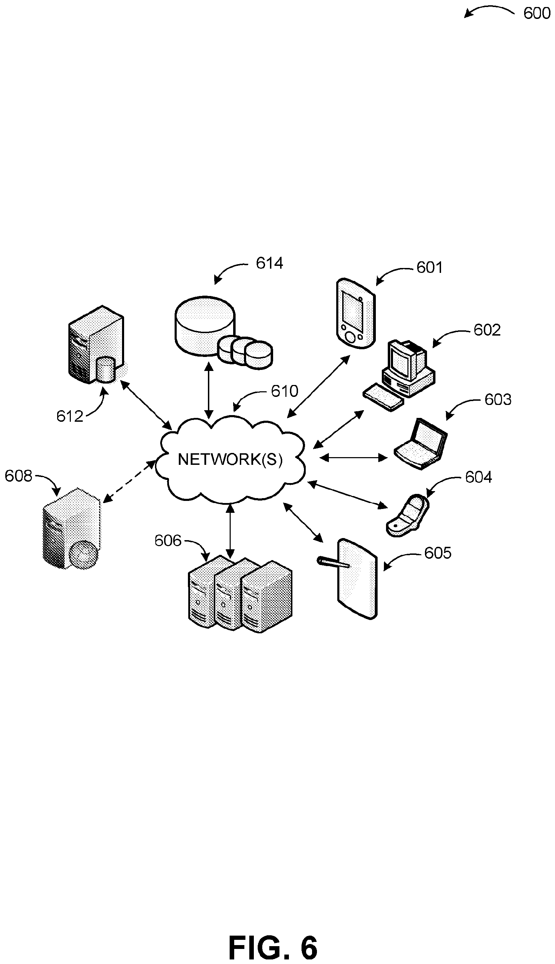

FIG. 6 is a networked environment, where a system according to embodiments may be implemented.

In addition to locally installed applications (for example, the analysis application 206 or the synchronization client 306), a detection engine and/or an anti-virus engine may also be employed in conjunction with hosted applications and services (for example, the cloud-based storage service 114 or the cloud-based storage service 310) that may be implemented via software executed over one or more servers 606 or an individual server 608, as illustrated in a diagram 600. A hosted service or an application may communicate with client applications on client devices (e.g., individual computing devices) through one or more networks 610 and control a user interface presented to users. The client devices may include a handheld computer 601, a desktop computer 602, a laptop computer 603, a smart phone 604, and/or a tablet computer 605. The tablet computer 605 may be a slate, in some examples.

The client devices 601-605 may be used to access the functionality provided by the hosted service or the application. The servers 606 and/or the individual server 608 may be used to provide a variety of services, as discussed above. Relevant data may be stored in one or more data stores (e.g. a data store 614), which may be managed by the server 606 or by the database server 612.

The one or more networks 610 may comprise any topology of servers, clients, Internet service providers, and communication media. A system according to embodiments may have a static or dynamic topology. The one or more networks 610 may include a secure network (e.g., an enterprise network), an unsecure network (e.g., a wireless open network), or the Internet. The one or more networks 610 may also coordinate communications over other networks, such as PSTN or cellular networks. The one or more networks 610 may provide communication between the nodes, as described herein. By way of example, and not limitation, the one or more networks 610 may include wireless media, such as acoustic, RF, infrared, and other wireless media.

Many other configurations of computing devices, applications, engines, modules, data sources, and data distribution systems may be employed to interrupt a synchronization of content between a client device and a cloud-based storage service. Furthermore, the networked environments discussed in FIG. 6 are for illustration purposes only. Embodiments are not limited to the example applications, modules, engines, or processes.

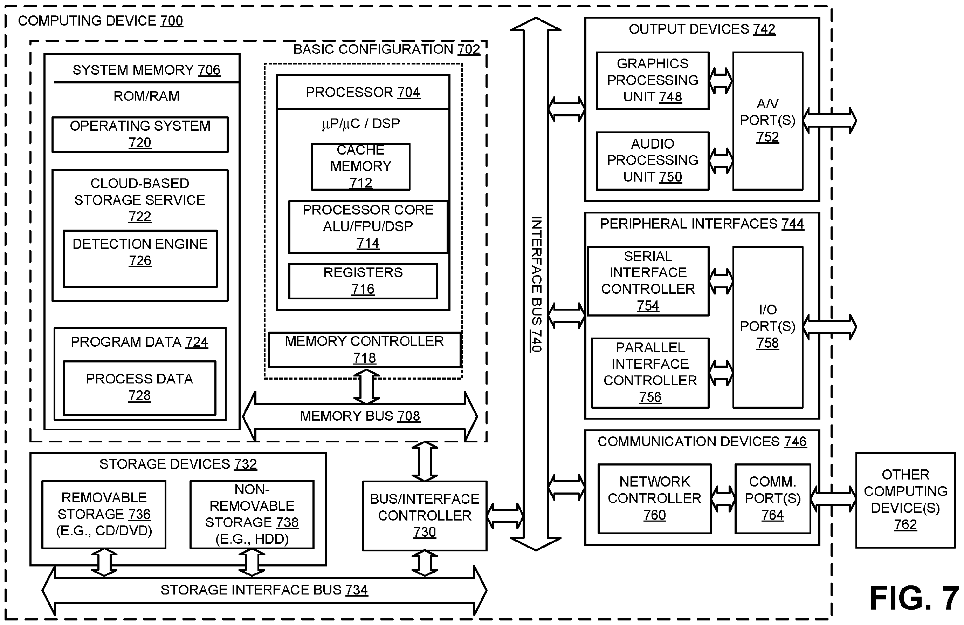

FIG. 7 is a block diagram of an example general purpose computing device, which may be used to interrupt a synchronization of content between a client device and a cloud-based storage service, according to at least some embodiments described herein.

For example, computing device 700 may be used as a server, desktop computer, portable computer, smart phone, special purpose computer, or similar device. In an example basic configuration 702, the computing device 700 may include one or more processors 704 and a system memory 706. A memory bus 708 may be used for communicating between the processor 704 and the system memory 706. The example basic configuration 702 is illustrated in FIG. 7 by those components within the inner dashed line.

Depending on the desired configuration, the processor 704 may be of any type, including but not limited to a microprocessor (µP), a microcontroller (µC), a digital signal processor (DSP), or any combination thereof. The processor 704 may include one more levels of caching, such as a level cache memory 712, one or more processor cores 714, and registers 716. The one or more processor cores 714 may (each) include an arithmetic logic unit (ALU), a floating point unit (FPU), a digital signal processing core (DSP Core), or any combination thereof. An example memory controller 718 may also be used with the processor 704, or in some implementations the example memory controller 718 may be an internal part of the processor 704.

Depending on the desired configuration, the system memory 706 may be of any type including but not limited to volatile memory (such as RAM) and non-volatile memory (such as ROM, flash memory, etc.), or any combination thereof. The system memory 706 may include an operating system 720, a cloud-based storage service 722, and program data 724. The cloud-based storage service 722 may include a detection engine 726, which may be an integrated module/engine of the cloud-based storage service 722. The cloud-based storage service 722 and/or the detection engine 726 may be configured to identify a usage pattern associated with a user in conjunction with the content, create a model based on the usage pattern, and detect an operation attempted to be performed on the content by the user. The attempted operation may be one of a creation, a deletion, a modification, and an encryption. The cloud-based storage service 722 and/or the detection engine 726 may be further configured to provide the attempted operation to the server executing the cloud-based storage service through a synchronization process and compare the attempted operation to the model to determine whether the attempted operation deviates from the usage pattern. In response to a determination that the attempted operation deviates from the usage pattern, the cloud-based storage service 722 and/or the detection engine 726 may be further configured to place a hold on executing the attempted operation and provide a notification of the attempted operation to a client device associated with the user for display. The program data 724 may include, among other data, process data 728, such as the usage patterns determined to create the model, as described herein.

The computing device 700 may have additional features or functionality, and additional interfaces to facilitate communications between the example basic configuration 702 and any desired devices and interfaces. For example, a bus/interface controller 730 may be used to facilitate communications between the example basic configuration 702 and one or more data storage devices 732 via a storage interface bus 734. The data storage devices 732 may be one or more removable storage devices 736, one or more non-removable storage devices 738, or a combination thereof. Examples of the removable storage and the non-removable storage devices include magnetic disk devices such as flexible disk drives and hard-disk drives (HDDs), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

The system memory 706, the removable storage devices 736 and the non-removable storage devices 738 are examples of computer storage media. Computer storage media includes, but is not limited to, RAM, ROM, EEPROM, flash memory or other memory technology, CD-ROM, digital versatile disks (DVDs), solid state drives, or other optical storage, magnetic cassettes, magnetic tape, magnetic disk storage or other magnetic storage devices, or any other medium which may be used to store the desired information and which may be accessed by the computing device 700. Any such computer storage media may be part of the computing device 700.

The computing device 700 may also include an interface bus 740 for facilitating communication from various interface devices (for example, one or more output devices 742, one or more peripheral interfaces 744, and an example communication device 746) to the example basic configuration 702 via the bus/interface controller 730. Some of the one or more output devices 742 may include a graphics processing unit 748 and an audio processing unit 750, which may be configured to communicate with various external devices, such as a display or speakers via one or more A/V ports 752. The one or more peripheral interfaces 744 may include a serial interface controller 754 or a parallel interface controller 756, which may be configured to communicate with external devices, such as input devices (e.g., a keyboard, a mouse, a pen, a voice input device, and/or a touch input device, etc.) or other peripheral devices (e.g., a printer and/or a scanner, etc.) via one or more I/O ports 758. The example communication device 746 may include a network controller 760, which may be arranged to facilitate communications with one or more other computing devices 762 over a network communication link via one or more communication ports 764. The one or more other computing devices 762 may include servers, computing devices, and comparable devices.

The network communication link may be one example of a communication media. The communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, the communication media may include wired media such as a wired network or direct-wired connection, and wireless media such as acoustic, radio frequency (RF), microwave, infrared (IR) and other wireless media. The term computer readable media, as used herein, may include both storage media and communication media.

The computing device 700 may be implemented as a part of a general purpose or a specialized server, a mainframe, or similar computer that includes any of the above functions. The computing device 700 may also be implemented as a personal computer, including both laptop computer configurations and non-laptop computer configurations.

Example embodiments may also include methods to interrupt a synchronization of content between a client device and a cloud-based storage service. These methods can be implemented in any number of ways, including the structures described herein. One such way may be by machine operations, of devices of the type described in the present disclosure. Another optional way may be for one or more of the individual operations of the methods to be performed in conjunction with one or more human operators performing some of the operations while other operations may be performed by machines. These human operators need not be collocated with each other, but each can be only with a machine that performs a portion of the program. In other embodiments, the human interaction can be automated such as by pre-selected criteria that may be machine automated.

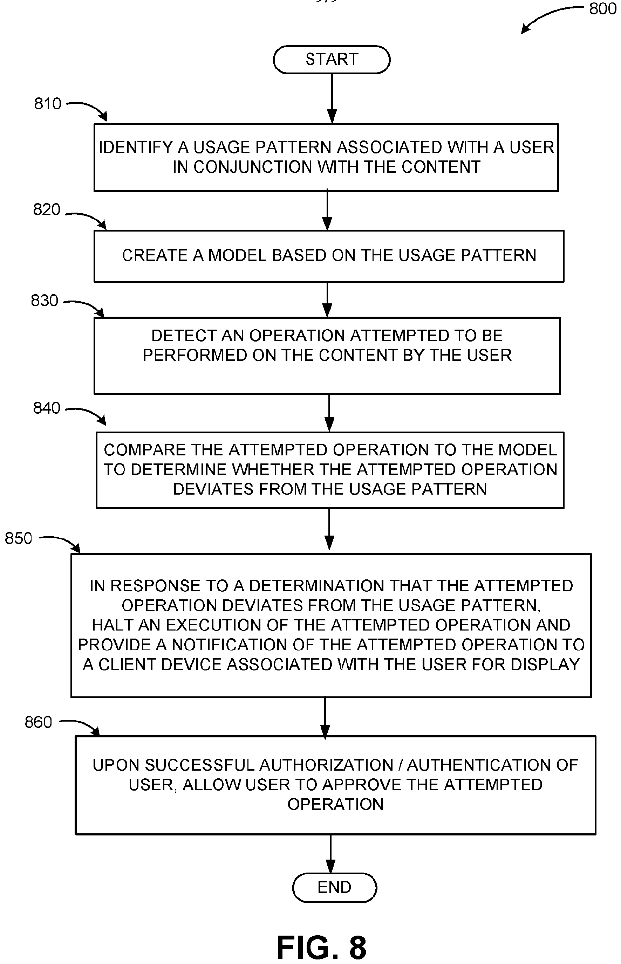

FIG. 8 includes a logic flow diagram that illustrates a process to interrupt a synchronization of content between a client device and a cloud-based storage service, according to at least some embodiments disclosed herein.

Process 800 may be implemented on a computing device, server, or other system. An example system may include a server comprising a communication interface, a memory, and a processor. The communication interface may be configured to facilitate communication between a client device and a cloud-based storage service. The memory may be configured to store instructions. The processor may be coupled to the memory. The processor, in conjunction with the instructions stored in the memory, may be configured to interrupt a synchronization of content between the client device and the cloud-based storage service.

Process 800 begins with operation 810, where the processor may be configured to identify a usage pattern associated with a user in conjunction with the content. In some examples, the usage pattern associated with the user may be determined based on a type of the content, previous operations performed on the content by the user, a size of an account of the user, and/or a frequency at which the user performed the previous operations on the content.

At operation 820, the processor may be configured to create a model based on the usage pattern. According to some examples, the processor may be further configured to identify a threshold based on the model. The threshold may identify a type of altered content, an amount of altered content, and/or an amount of altered content within a time period. The threshold may be one of a learned value or a calculated value. In some examples, the threshold may be based on the type of the content, previous operations performed on the content by a user, a size of an account associated with the user, and/or a frequency at which the user performed the previous operations on the content. According to further examples, the processor may be further configured to determine whether the threshold is exceeded during the attempted operation. In response to a determination that the threshold is exceeded during the attempted operation, the processor may be further configured to provide another notification to the client device for display and prevent a synchronization process from occurring.

At operation 830, the processor may be configured to detect an operation attempted to be performed on the content by the user. The attempted operation may be one of a creation, a deletion, a modification, and an encryption. At operation 840, the processor may be configured to compare the attempted operation to the model to determine whether the attempted operation deviates from the usage pattern.

At operation 850, in response to a determination that the attempted operation deviates from the usage pattern, the processor may be configured to halt an execution of the attempted operation and provide a notification of the attempted operation to a client device associated with the user for display. In other examples, in response to a determination that the attempted operation does not deviate from the usage pattern, the processor may be further configured to enable an execution of the attempted operation and enable the synchronization process. In further examples, in response to a determination that the attempted operation deviates from the usage pattern, the processor may be further configured to prevent the synchronization process.

At operation 860, the user may be allowed to approved the attempted operation upon successful authorization/authentication of the user by the system.

The operations included in process 800 are for illustration purposes. Interruption of a synchronization of content between a client device and a cloud-based storage service may be implemented by similar processes with fewer or additional steps, as well as in different order of operations using the principles described herein. The operations described herein may be executed by one or more processors operated on one or more computing devices, one or more processor cores, specialized processing devices, and/or general purpose processors, among other examples.

The above specification, examples and data provide a complete description of the manufacture and use of the composition of the embodiments. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments.

## Claims

1. A method to interrupt a synchronization of content between a client device (102, 202) associated with a user (104, 204) and a cloud-based storage service (114, 214), the method comprising:
identifying (810) a usage pattern associated with the user in conjunction with the content;
creating (820) a model based on the usage pattern;
detecting (830) an operation, wherein the detected operation is to be performed on the content;
comparing (840) the detected operation to the model to determine whether the detected operation deviates from the usage pattern; and
in response to a determination that the detected operation deviates from the usage pattern,
halting (850) an execution of the detected operation and preventing and/or placing a hold on synchronization of the content between the client device and the cloud based storage; and
providing (850) a notification of the detected operation to the client device for display.

2. The method of claim 1, wherein the detected operation is provided to a server executing the cloud-based storage service via a synchronization client executing on the client device.

3. The method of claim 2, further comprising:
in response to a determination that the detected operation does not deviate from the usage pattern,
enabling an execution of the detected operation; and
enabling the synchronization process; and
in response to a determination that the detected operation deviates from the usage pattern, preventing the synchronization process.

4. The method of claim 1, further comprising:
providing a restoration element associated with the notification to the client device for display, wherein the restoration element provides the user with a user-selectable content restoration option; and
in response to detecting an activation of the restoration element,
enabling a user to select a previous version of the content preserved at the cloud-based storage service to restore; and
replacing the content with the previous version of the content.

5. The method of claim 1, further comprising:
determining the usage pattern associated with the user based on one or more of: a type of the content, previous operations performed on the content by the user, a size of an account of the user, and a frequency at which the user performed the previous operations on the content.

6. The method of claim 1, further comprising:
identifying a threshold based on the model, wherein the threshold identifies one or more of a type of altered content, an amount of altered content, and an amount of altered content within a time period;
determining whether the threshold is exceeded during the detected operation; and
in response to a determination that the threshold is exceeded during the detected operation,
providing another notification to the client device for display; and
preventing a synchronization process from occurring.

7. A server configured to interrupt a synchronization of content between a client device (102, 202) associated with a user (104, 204) and a cloud-based storage service (114, 214), the server comprising:
a communication interface (746) configured to facilitate communication between the client device and the cloud-based storage service;
a memory (706) configured to store instructions; and
a processor (704) coupled to the memory, wherein the processor, in conjunction with the instructions stored in the memory, is configured to:
identify (810) a usage pattern associated with the user in conjunction with the content;
create (820) a model based on the usage pattern;
detect (830) an operation , wherein the detected operation is to be performed on the content, wherein the attempted operation is one of a creation, a deletion, a modification, and an encryption;
compare (840) the detected operation to the model to determine whether the detected operation deviates from the usage pattern; and
in response to a determination that the detected operation deviates from the usage pattern,
halt (850) an execution of the detected operation and preventing and/or placing a hold on synchronization of the content between the client device and the cloud based storage; and
provide (850) a notification of the detected operation to a client device associated with the user for display.

8. The server of claim 7, wherein the notification prompts a user to one of approve the detected operation and reject the attempted operation.

9. The server of claim 7, wherein the detected operation is provided to the server executing the cloud-based storage service via a synchronization client executing on the client device.

10. The server of claim 8, wherein the processor is further configured to:
in response to detecting an approval of the detected operation,
remove the halt on the execution of the detected operation; and
allow the synchronization process to occur, wherein the synchronization process synchronizes modified content between the client device and the cloud-based storage service.

11. The server of claim 8, wherein the processor is further configured to:
in response to detecting a rejection of the detected operation,
prevent an execution of the detected operation; and
prevent the synchronization process from occurring.

12. A computer-readable medium comprising instructions that, when executed by a computer, cause the computer to carry out a method to interrupt a synchronization of content between a client device (102, 202) associated with a user (104, 204) and a cloud-based storage service (114, 214), the method comprising:
identifying (810) a usage pattern associated with a user in conjunction with the content;
creating (820) a model based on the usage pattern;
detecting (830) an operation , wherein the detected operation is to be performed on the content;
comparing (840) the detected operation to the model to determine whether the detected operation deviates from the usage pattern; and
in response to a determination that the detected operation deviates from the usage pattern,
halting (850) an execution of the detected operation and preventing and/or placing a hold on synchronization of the content between the client device and the cloud based storage; and
providing (850) a notification of the detected operation to the client device for display, wherein the notification prompts a user to one of approve the detected operation and reject the detected operation.

13. The computer-readable medium of claim 12, wherein the detected operation is provided to the server executing the cloud-based storage service via a synchronization client executing on the client device.

## Patentansprüche

1. Verfahren zur Unterbrechung einer Synchronisation von Inhalt zwischen einer Client-Vorrichtung (102, 202), die mit einem Benutzer (104, 204) assoziiert ist und einem Cloud-basierten Speicherservice (114, 214), wobei das Verfahren Folgendes umfasst:
Identifizieren (810) eines Benutzungsmusters, das assoziiert ist mit dem Benutzer in Verbindung mit dem Inhalt;
Erzeugen (820) eines Models basierend auf dem Benutzungsmuster;
Detektieren (830) einer Operation, wobei die detektierte Operation auf den Inhalt angewendet werden soll;
Vergleichen (840) der detektierten Operation mit dem Model, um festzustellen, ob die detektierte Operation von dem Benutzungsmuster abweicht; und
in Reaktion auf die Feststellung, dass die detektierte Operation vom Benutzungsmuster abweicht,
Anhalten (850) einer Ausführung der detektierten Operation und Verhindern und/oder Sperren einer Synchronisation des Inhalts zwischen der Client-Vorrichtung und dem Cloud-basierten Speicher; und
Zur Verfügung stellen (850) einer Benachrichtigung der detektierten Operation an die Client-Vorrichtung zur Anzeige.

2. Verfahren nach Anspruch 1, wobei die detektierte Operation einem Server zur Verfügung gestellt wird, der den Cloud-basierten Speicherservice mittels eines Synchronisationsclients ausführt, der auf der Client-Vorrichtung ausgeführt wird.

3. Verfahren nach Anspruch 2, ferner umfassend:
in Reaktion auf die Bestimmung, dass die detektierte Operation nicht vom Benutzungsmuster abweicht,
Ermöglichen einer Ausführung der detektierten Operation; und
Ermöglichen des Synchronisationsprozesses; und
in Reaktion auf die Bestimmung, dass die detektierte Operation vom Benutzungsmuster abweicht, Verhindern des Synchronisationsprozesses.

4. Verfahren nach Anspruch 1, ferner umfassend:
Bereitstellen eines Wiederherstellungselements, das mit der Benachrichtigung an die Client-Vorrichtung zur Anzeige assoziiert ist, wobei das Wiederherstellungselement dem Benutzer eine vom Benutzer auswählbare Wiederherstellungsoption für den Inhalt bereitstellt; und
in Reaktion auf das Detektieren einer Aktivierung des Wiederherstellungselements,
einem Benutzer die Auswahl einer vorherigen Version des Inhalts ermöglichen, die am Cloud-basierten Speicherservice aufbewahrt wird; und
Ersetzen des Inhalts durch die vorherige Version des Inhalts.

5. Verfahren nach Anspruch 1, ferner umfassend:
Bestimmen des mit dem Benutzer assoziierten Benutzungsmusters basierend auf: einem Typ des Inhalts, vorherigen Operationen, die durch den Benutzer am Inhalt durchgeführt wurden, einer Größe eines Accounts des Benutzers, und/oder einer Frequenz, mit der der Benutzer die vorherigen Operationen am Inhalt durchführte.

6. Verfahren nach Anspruch 1, ferner umfassend:
Identifizieren einer Schwelle basierend auf dem Model, wobei die Schwelle Folgendes identifiziert: einen Typ von geändertem Inhalt, eine Menge von geändertem Inhalt und/oder eine Menge von innerhalb einer Zeitspanne geändertem Inhalt.
Feststellen, ob die Schwelle während einer detektierten Operation überschritten wird; und
in Reaktion auf eine Feststellung, dass die Schwelle während der detektierten Operation überschritten wird,
Bereitstellen einer weiteren Benachrichtigung an die Client-Vorrichtung; und
Verhindern eines Synchronisationsprozesses.

7. Server, der konfiguriert ist, um eine Synchronisation von Inhalt zwischen einer Client-Vorrichtung (102, 202), die mit einem Benutzer (104, 204) assoziiert ist, und einem Cloud-basierten Speicherservice (114, 214) zu unterbrechen, wobei der Server Folgendes umfasst:
Eine Kommunikationsschnittstelle (746), die konfiguriert ist, um Kommunikation zwischen der Client-Vorrichtung und dem Cloud-basierten Speicher zu unterstützen;
ein Speicher (706), der konfiguriert ist, um Befehle zu speichern; und
einen Prozessor (704), der mit dem Speicher verbunden ist, wobei der Prozessor, in Verbindung mit den Befehlen im Speicher, konfiguriert ist zum:
Identifizieren (810) eines Benutzungsmusters, das assoziiert ist mit dem Benutzer in Verbindung mit dem Inhalt;
Erzeugen (820) eines Models basierend auf dem Benutzungsmuster;
Detektieren (830) einer Operation, wobei die detektierte Operation auf den Inhalt angewendet werden soll, wobei die versuchte Operation eine Erzeugungsoperation, eine Löschoperation, eine Änderungsoperation oder eine Verschlüsselungsoperation ist;
Vergleichen (840) der detektierten Operation mit dem Model, um festzustellen, ob die detektierte Operation von dem Benutzungsmuster abweicht; und
in Reaktion auf eine Feststellung, dass die detektierte Operation vom Benutzungsmuster abweicht,
Anhalten (850) einer Ausführung der detektierten Operation und Verhindern und/oder Sperren einer Synchronisation des Inhalts zwischen der Client-Vorrichtung und dem Cloud-basierten Speicher; und
Bereitstellen (850) einer Benachrichtigung der detektierten Operation an die Client-Vorrichtung zur Anzeige.

8. Server nach Anspruch 7, wobei die Benachrichtigung einen Benutzer auffordert die detektierte Operation zu genehmigen oder die versuchte Operation abzulehnen.

9. Server nach Anspruch 7, wobei die detektierte Operation einem Server bereitgestellt wird, der den Cloud-basierten Speicherservice mittels eines Synchronisations-Clients ausführt, der auf der Client-Vorrichtung ausgeführt wird.

10. Server nach Anspruch 8, wobei der Prozessor ferner konfiguriert ist zum:
in Reaktion auf eine Feststellung einer Genehmigung der detektierten Operation,
Entfernen der Sperre der Ausführung der detektierten Operation; und
Erlauben des Synchronisationsprozesses, wobei der Synchronisationsprozess modifizierten Inhalt zwischen der Client-Vorrichtung und dem Cloud-basierten Speicherservice synchronisiert.

11. Server nach Anspruch 8, wobei der Prozessor ferner konfiguriert ist zum:
in Reaktion auf eine Feststellung einer Ablehnung der detektierten Operation,
Verhindern der Ausführung der detektierten Operation; und
Verhindern des Synchronisationsprozesses.

12. Computerlesbares Medium, das Befehle umfasst, die, wenn sie durch einen Computer ausgeführt werden, den Computer dazu veranlassen, ein Verfahren zur Unterbrechung einer Synchronisation von Inhalt zwischen einer Client-Vorrichtung (102, 202), die mit einem Benutzer (104, 204) assoziiert ist, und einem Cloud-basierten Speicherservice (114, 214) auszuführen, wobei das Verfahren Folgendes umfasst:
Identifizieren (810) eines Benutzungsmusters, das assoziiert ist mit dem Benutzer in Verbindung mit dem Inhalt;
Erzeugen (820) eines Models basierend auf dem Benutzungsmuster;
Detektieren (830) einer Operation, wobei die detektierte Operation auf den Inhalt angewendet werden soll;
Vergleichen (840) der detektierten Operation mit dem Model, um festzustellen, ob die detektierte Operation von dem Benutzungsmuster abweicht; und
in Reaktion auf eine Feststellung, dass die detektierte Operation vom Benutzungsmuster abweicht,
Anhalten (850) einer Ausführung der detektierten Operation und Verhindern und/oder Sperren einer Synchronisation des Inhalts zwischen der Client-Vorrichtung und dem Cloud-basierten Speicher; und
Bereitstellen (850) einer Benachrichtigung der detektierten Operation an die Client-Vorrichtung zur Anzeige, wobei die Benachrichtigung einen Benutzer auffordert die detektierte Operation zu genehmigen oder die detektierte Operation abzulehnen.

13. Computerlesbares Medium nach Anspruch 12, wobei die detektierte Operation einem Server bereitgestellt wird, der den Cloud-basierten Speicherservice mittels eines Synchronisations-Clients ausführt, der auf der Client-Vorrichtung ausgeführt wird.

## Revendications

1. Procédé destiné à interrompre une synchronisation de contenu entre un dispositif client (102, 202), associé à un utilisateur (104, 204) et un service de stockage en nuage (114, 214), le procédé comprenant :
l'identification (810) d'une séquence d'utilisation associée à l'utilisateur conjointement avec le contenu,
la création (800) d'un modèle fondé sur la séquence d'utilisation,
la détection (830) d'une opération, l'opération détectée devant être effectuée sur le contenu,
la comparaison (840) de l'opération détectée au modèle afin de déterminer si l'opération détectée s'écarte de la séquence d'utilisation, et
en réponse à la détermination de ce que l'opération détectée s'écarte de la séquence d'utilisation,
l'arrêt (850) de l'exécution de l'opération détectée et la prévention et/ou la mise en attente de la synchronisation du contenu entre le dispositif client et le dispositif de stockage en nuage, et
la délivrance (150) d'une notification de l'opération détectée au dispositif client en vue d'un affichage.

2. Procédé selon la revendication 1, dans lequel l'opération détectée est fournie à un serveur exécutant le service de stockage en nuage par l'intermédiaire d'un client de synchronisation s'exécutant sur le dispositif client.

3. Procédé selon la revendication 2, comprenant en outre :
en réponse à la détermination de ce que l'opération détectée ne s'écarte pas de la séquence d'utilisation,
l'autorisation de l'exécution de l'opération détectée, et
l'autorisation du traitement de synchronisation, et
en réponse à la détermination de ce que l'opération détectée s'écarte de la séquence d'utilisation, la prévention du traitement de synchronisation.

4. Procédé selon la revendication 1, comprenant en outre :
la fourniture d'un élément de restauration associé à la notification faite au dispositif client en vue d'un affichage, l'élément de restauration procurant à l'utilisateur une option de restauration de contenu sélectionnable par l'utilisateur, et
en réponse à la détection de l'activation de l'élément de restauration,
l'activation d'un utilisateur pour qu'il sélectionne une version précédente du contenu, préservée au niveau du service de stockage en nuage en vue de la restauration, et
le remplacement du contenu avec la version précédente du contenu.

5. Procédé selon la revendication 1, comprenant en outre :
la détermination de la séquence d'utilisation associée à l'utilisateur sur la base d'un ou plusieurs paramètres parmi : le type de contenu, les opérations précédentes effectuées sur le contenu par l'utilisateur, la taille d'un compte de l'utilisateur et la fréquence à laquelle l'utilisateur a effectué les précédentes opérations sur le contenu.

6. Procédé selon la revendication 1, comprenant en outre :
l'identification d'un seuil fondé sur le modèle, le seuil identifiant un ou plusieurs paramètres parmi le type de contenu modifié, la quantité de contenu modifié et la quantité de contenu modifié dans un certain intervalle de temps,
la détermination de ce que le seuil est dépassé pendant l'opération détectée, et
en réponse à la détermination de ce que le seuil est dépassé pendant l'opération détectée,
la fourniture d'une autre notification au dispositif client en vue d'un affichage, et
la prévention d'apparition d'un traitement de synchronisation.

7. Serveur configuré pour interrompre une synchronisation de contenu entre un dispositif client (102, 202) associé à un utilisateur (104, 204) et un service de stockage en nuage (114, 214), le serveur comprenant :
une interface de communication (746) configurée pour faciliter une communication entre le dispositif client et le service de stockage en nuage,
une mémoire (706) configurée pour stocker des instructions, et
un processeur (704) couplé à la mémoire, le processeur étant configuré, conjointement avec les instructions stockées en mémoire, pour :
identifier (810) une séquence d'utilisation associée à l'utilisateur conjointement avec le contenu,
créer (800) un modèle fondé sur la séquence d'utilisation,
détecter (830) une opération, l'opération détectée devant être effectuée sur le contenu, l'opération tentée étend l'une d'une création, d'une suppression, d'une modification et d'un cryptage,
comparer (840) l'opération détectée au modèle afin de déterminer si l'opération détectée s'écarte de la séquence d'utilisation, et
en réponse à la détermination de ce que l'opération détectée s'écarte de la séquence d'utilisation,
arrêter (850) l'exécution de l'opération détectée et empêcher et/ou mettre en attente la synchronisation du contenu entre le dispositif client et le dispositif de stockage en nuage, et
délivrer (150) une notification de l'opération détectée au dispositif client en vue d'un affichage.

8. Serveur selon la revendication 7, dans lequel la notification invite un utilisateur à une action parmi approuver l'opération détectée et rejeter l'opération tentée.

9. Serveur selon la revendication 7, dans lequel l'opération détectée est délivrée au serveur qui exécute le service de stockage en nuage par l'intermédiaire d'un client de synchronisation s'exécutant sur le dispositif client.

10. Serveur selon la revendication 8, dans lequel le processeur est en outre configuré pour :
en réponse à la détection d'une approbation de l'opération détectée,
supprimer la pause sur l'exécution de l'opération détectée, et
autoriser l'apparition du traitement de synchronisation, le traitement de synchronisation synchronisant un contenu modifié entre le dispositif client et le service de stockage en nuage.

11. Serveur selon la revendication 8, dans lequel le processeur est en outre configuré pour :
en réponse à la détection d'un rejet de l'opération détectée,
empêcher l'exécution de l'opération détectée, et
empêcher l'apparition d'un traitement de synchronisation.

12. Support pouvant être lu par ordinateur comprenant des instructions qui, lorsqu'elles sont exécutées par un ordinateur, amènent l'ordinateur à exécuter un procédé destiné à interrompre une synchronisation de contenu entre un dispositif client (102, 202) associé à un utilisateur (104, 204) et un service de stockage en nuage (114, 214), le procédé comprenant :
l'identification (810) d'une séquence d'utilisation associée à l'utilisateur conjointement avec le contenu,
la création (800) d'un modèle fondé sur la séquence d'utilisation,
la détection (830) d'une opération, l'opération détectée devant être effectuée sur le contenu,
la comparaison (840) de l'opération détectée au modèle afin de déterminer si l'opération détectée s'écarte de la séquence d'utilisation, et
en réponse à la détermination de ce que l'opération détectée s'écarte de la séquence d'utilisation,
l'arrêt (850) de l'exécution de l'opération détectée et la prévention et/ou la mise en attente sur la synchronisation du contenu entre le dispositif client et le dispositif de stockage en nuage, et
la délivrance (150) d'une notification de l'opération détectée au dispositif client en vue d'un affichage, la notification invitant un utilisateur à une action parmi approuver l'opération détectée et rejeter l'opération détectée.

13. Support pouvant être lu par ordinateur selon la revendication 12, dans lequel l'opération détectée est fournie au serveur qui exécute le service de stockage en nuage par l'intermédiaire d'un client de synchronisation s'exécutant sur le dispositif client.
